# EUROPÄISCHE PATENTSCHRIFT

(11) **EP 0 657 555 B1**
(45) Veröffentlichungstag und Bekanntmachung des Hinweises auf die Patenterteilung: **04.09.1996**
(21) Anmeldenummer: 94117561.4
(22) Anmeldetag: 08.11.1994
(51) Int. Cl.: C22C 9/04, C22C 18/02, F16D 23/04

(54) **Kupfer-Zink-Legierung**
Copper-zinc alloy
Alliage cuivre-zinc

(30) Priorität: 18.11.1993 DE 4339426
(43) Veröffentlichungstag der Anmeldung: 14.06.1995
(73) Patentinhaber: DIEHL GMBH & CO., D-90478 Nürnberg (DE)
(72) Erfinder: Gaag, Norbert, Dipl.-Ing., D-91207 Lauf (DE); Ruchel, Peter, Dr.-Ing., D-91207 Lauf (DE)

(56) Entgegenhaltungen:
- DE-A- 2 718 495
- DE-A- 3 735 783
- DE-A- 3 805 794
- DE-A- 3 809 994
- US-A- 4 362 579
- PATENT ABSTRACTS OF JAPAN vol. 13, no. 595 (C-672) 27. Dezember 1989 & JP-A-01 252 745 (MITSUBISHI METAL CORP.) 9. Oktober 1989
- PATENT ABSTRACTS OF JAPAN vol. 11, no. 282 (C-446) 11. September 1987 & JP-A-62 080 244 (CHUETSU GOKIN CHUKO KK) 13. April 1987
- PATENT ABSTRACTS OF JAPAN vol. 15, no. 227 (C-0839) 10. Juni 1991 & JP-A-03 068 732 (NIPPON MINING CO. LTD.) 25. März 1991
- PATENT ABSTRACTS OF JAPAN vol. 14, no. 431 (C-0759) 17. September 1990 & JP-A-02 166 246 (MITSUBISHI METAL CORP.) 26. Juni 1990

## Beschreibung

Die Erfindung betrifft eine Kupfer-Zink-Legierung für Halbzeuge und Gegenstände, die hochbelastet und extrem auf Verschleiß beansprucht werden,insbesondere für Synchronringe.

Für Synchronringe in Kraftfahrzeuggetrieben sind hohe Belastbarkeit, d.h. Haltbarkeit, ein hoher Reibungsbeiwert und ein hoher Verschleißwiderstand kennzeichnende Größen von besonderer Bedeutung. Ein hoher Reibungsbeiwert ist für schnelles und präzises Schalten, d.h. für den Schaltkomfort, ein hoher Verschleißwiderstand für die Lebensdauer des Synchronringes von Wichtigkeit.

Die Anforderungen an Synchronringe steigen wegen der weiter steigenden Leistung der Kraftfahrzeugmotoren ebenfalls weiter. Im Hinblick auf den zunehmenden Kostendruck bei der Fertigung solcher Synchronringe steht aber auch immer mehr die Frage an, ob die vielfach wegen der Verschleißbeständigkeit aufgebrachte Beschichtung mit Molybdän nicht durch eine bessere Legierung vermieden werden kann.

Die Erfindung geht aus von einer Legierung, wie sie in der DE-PS 37 35 783 der Anmelderin beschrieben ist. Diese Legierung besteht aus 50 bis 65 % Kupfer, 1 bis 6 % Aluminium, 0,5 bis 5 % Silizium, 5 bis 8 % Nickel sowie wahlweise 0 bis 1 % Eisen, 0 bis 2 % Blei sowie Zink als Rest. Bei dieser Legierung liegt das Nickel überwiegend in intermetallischer Verbindung mit Silizium als Nickelsilizide vor, die in abgerundeter Form fein und gleichmäßig verteilt sind.

Die Erfindung hat es sich zum Ziel gesetzt, eine an sich bereits gute Legierung der vorbeschriebenen Art hinsichtlich des Verschleißwertes noch mehrfach zu übertreffen.

Zur Lösung dieser Aufgabe schlägt die Erfindung vor daß sie 40 - 65 % Cu, 8 - 25 % Ni, 2,5 - 5 % Si, 0 - 3 % Al, 0 - 3 % Fe, 0 - 2 % Mn, 0 - 2 % Pb, Rest Zink sowie unvermeidbare Verunreinigungen aufweist, daß das Verhältnis Ni : Si = 3 bis 5 : 1 beträgt, und daß das Gefüge wenigstens 75 %, aus β-Anteilen, Rest α-Anteilen, jedoch keinen γ-Anteilen besteht und die Nickelsilizide als vorwiegend rundliche intermetallische Phase vorliegen.

Bevorzugt ist eine Zusammensetzung derart, daß daß sie 43 - 52 % Cu, 10 - 17 Ni, 3 - 4,2 % Si, 0 - 1,5 % Al, 0 - 1 % Fe, 0 - 1 % Mn, 0 - 1 % Pb, Rest Zink und unvermeidbare Verunreinigungen aufweist, und daß das Gefüge zu wenigstens 80 % aus β-Anteilen, Rest α-Anteilen, besteht.

Besonders bevorzugt ist eine Zusammensetzung derart, daß sie 44 - 49 % Cu, 13,5 - 16 % Ni, 3,2 - 3,9 % Si, Rest Zink und unvermeidbare Verunreinigungen aufweist und daß das Gefüge zu 100 % aus β-Phase besteht.

Die Gehaltsangaben in den Ansprüchen und der Beschreibung sind jeweils Gewichtsprozente.

Die durch die Erfindung vorgeschlagene Legierung weist überraschend eine Verbesserung des Verschleißwertes um den Faktor 3 bis 5 gegenüber der vorgenannten bekannten Legierung auf und bietet damit gute Möglichkeiten, bei Synchronringen auf die zusätzliche Beschichtung mit Molybdän verzichten zu können.

Wesentlich für diese herausragenden Eigenschaften sind der sehr hohe Gehalt an Nickel und Silizium, der dazu führt, daß in der Matrix Nickelsilizide mit einem Volumengehalt von etwa 35 % vorliegen. Weiterhin ist wesentlich, daß das Gefüge keinerlei γ -Phase aufweist und hauptsächlich aus β-Phase besteht.

Die mit der Erfindung erzielbaren Verbesserungen sind insofern überraschend, weil bisher ein so hoher Volumenanteil an Siliziden anderer Silizidbildner, wegen Vergröberung und Nesterbildung der Silizide nicht möglich war und zu Versprödung des Gefüges und schlechter Zerspanbarkeit führte. Es wurde deshalb bisher niemals versucht, so hohe Anteile an Nickel und Silizium in einer Legierung zu verwenden, die die eingangs angegebenen Eigenschaften haben soll. Erst durch die Abstimmung aller Parameter, insbesondere der anderen Elemente - die zunächst unbekannt war -, konnte man eine gut verarbeitbare Legierung mit gleichmäßigem Gefüge mit den angegebenen Eigenschaften erstellen. In diesem Zusammenhang war insbesondere die Erkenntnis wichtig, daß die Beigabe von Aluminium für den Verschleißwiderstand ungünstig ist, nur hinsichtlich einer leichten Erhöhung des Reibungsbeiwertes in geringem Umfange zweckmäßig sein kann.

Wie bereits erwähnt, ist das Fehlen von γ -Gefüge essentiell. Wichtig ist, daß ganz überwiegend β-Gefüge vorherrscht, nämlich wenigstens 75 %, vorzugsweise sogar über 85 %. Der Rest ist dann α-Gefüge.

Wichtig für den hohen Verschleißwiderstand ist ein grundsätzlich hoher Silizium-Anteil, der, verbunden über einen Faktor 3 bis 5, einen entsprechend hohen Nickelgehalt erfordert. Damit die unerwünschte γ -Phase nicht auftritt, darf Silizium nicht in freier Form in der Matrix vorliegen, es muß vollständig vom Nickel gebunden sein. Geringe Mengen an freiem Nickel stören nicht, tendenziell wird durch freies Nickel jedoch der Verschleißwiderstand verringert. Das Verhältnis Nickel zu Silizium beträgt besonders bevorzugt etwa 3,5 bis 4. Verläßt man das Verhältnis 3 bis 5 : 1 für Ni : Si nach oben oder unten, so sinkt in jedem Falle der Verschleißwiderstand, bei Werten über 5 sinkt auch die gute Verarbeitbarkeit deutlich ab. Die angegebenen Legierungsgrenzen und Faktoren sind zwar wesentlich aber selbstverständlich nicht völlig frei kombinierbar. In Randbereichen kann man nur durch geschickte Kombination noch Legierungen der besagten Eigenschaften erhalten. Bei Legierung 8 wäre z.B. ein höherer Nickel-Gehalt erforderlich gewesen, um γ-Phase zu vermeiden.

Zusätze von Eisen, Mangan und Blei verschlechtern den Verschleißwiderstand. Blei ist in geringen Mengen jedoch im Hinblick auf die gute Bearbeitbarkeit der Legierung von Nutzen.

Der Stand der Technik auf dem Gebiet der Cu-Zn-Ni-Si-Legierungen, der im übrigen in der eingangs genannten Patentschrift ausgiebig besprochen ist, bezieht sich nur auf Legierungen mit geringen Gehalten an Nickel und Silizium oder zumindest niedrigen Gehalten an NickelSiliziden. Es sei nochmals wiederholt, daß die überraschenden Eigenschaften der Erfindung durch den hohen Gehalt an Nickel und Silizium und damit einem sehr hohen Gehalt an Nickelsiliziden in der Matrix beruhen. Dies ist auch aus der Tabelle 1 entnehmbar, in welcher verschiedene erfindungsgemäße Legierungen einer Standardlegierung sowie der Legierung gemäß der eingangs genannten Patentschrift gegenübergestellt sind. Die Legierungen 1 bis 7 der Tabelle 1 zeigen die Zusammensetzung und die Daten der erfindungsgemäßen Legierung, die Legierung 8 eine Legierung, bei welcher ausgeprägt Gefüge mit höherem γ-Anteil vorliegt. Die Legierung war nicht verarbeitbar. Die Legierung 9 zeigt eine Standardlegierung, die Legierung 10 bezieht sich auf eine Zusammensetzung, wie sie in dem eingangs genannten Patent aus dem Stand der Technik bekannt ist. Man erkennt aus dieser Tabelle, daß die besonders bevorzugten Legierungen 1 bis 3 im Verschleißverhalten um den Faktor 4 bis 5 besser sind als die eingangs beschriebene bekannte Legierung. Der Reibungsbeiwert ist dabei im wesentlichen konstant über alle untersuchten Legierungen geblieben.

Man erkennt aus der Tabelle auch, daß Zusätze von Eisen, Mangan oder Aluminium, insbesondere das letztere, den Verschleißwiderstand deutlich verringern, daß die Zugabe von Aluminium jedoch den Vorteil einer Erhöhung des Reibungsbeiwertes hat. Insgesamt ist diese Legierung 5 jedoch nicht besser als die Legierung 10 aus dem Stand der Technik. Aus der Tabelle ist ferner entnehmbar, daß der Siliziumgehalt nur in geringem Umfange schwanken darf. Die Wahl des Verhältnisses Nickel : Silizium ist nicht ganz so kritisch und führt dann zu leicht unterschiedlichen Gehalten an Nickel.

Die Versuchslegierungen wurden wie folgt hergestellt und verarbeitet. Es wurde bei einer Gießtemperatur von etwa 1.050 °C in Kokille gegossen. Anschließend erfolgte ein Warmverformen durch Strangpressen bei 650 °C bis 750 °C. Nach Abkühlen an Luft wurde bei 650 - 750°C geschmiedet. Danach wurde in Luft abgekühlt. Danach ist ein Auslagern, bevorzugt bei 250 °C während 4 Stunden vorteilhaft, jedoch nicht zwingend.

Die Legierung kann auch in Form von Rohren gegossen werden und anschließend bei 650 °C bis 750 °C geschmiedet werden. Anstelle des Abkühlens in Luft ist bei beiden Herstellungsalternativen Abkühlen in Preßluft möglich.

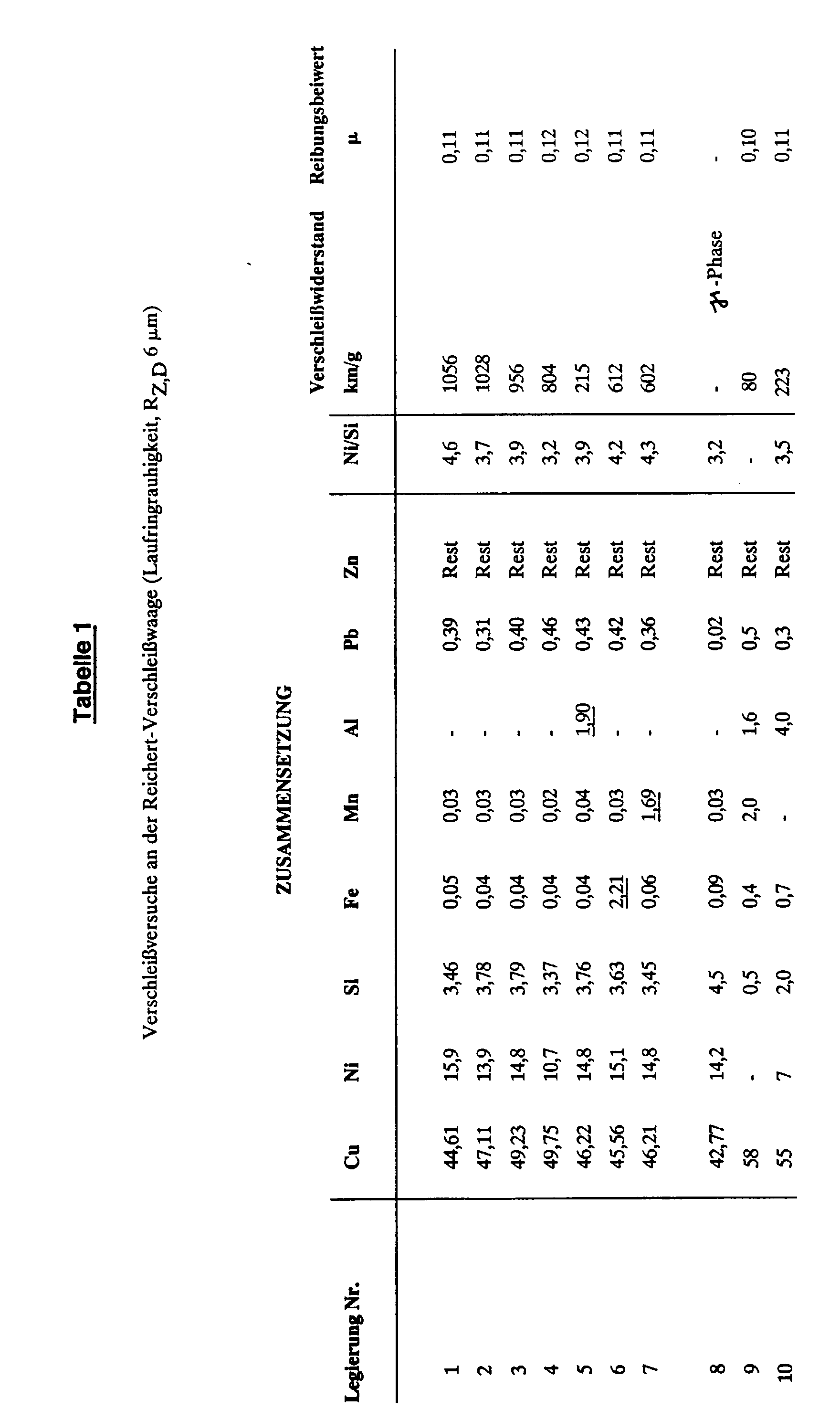

## Patentansprüche

1. Kupfer-Zink-Legierung für Halbzeuge und Gegenstände, die hochbelastet und extrem auf Verschleiß beansprucht werden und einen hohen Reibungsbeiwert aufweisen, insbesondere für Synchronringe,
dadurch gekennzeichnet,
daß sie 40 - 65 % Cu, 8 - 25 % Ni, 2,5 - 5 % Si, 0 - 3 % Al, 0 - 3 % Fe, 0 - 2 % Mn, 0 - 2 % Pb, Rest Zink sowie unvermeidbare Verunreinigungen aufweist,
daß das Verhältnis Ni : Si = 3 bis 5 : 1 beträgt,
und daß das Gefüge wenigstens 75 %, aus β-Anteilen, Rest α-Anteilen, jedoch keinen γ-Anteilen besteht und die Nickelsilizide als vorwiegend rundliche intermetallische Phase vorliegen.

2. Kupfer-Zink-Legierung nach Anspruch 1,
dadurch gekennzeichnet,
daß sie 43 - 52 % Cu, 10 - 17 Ni, 3 - 4,2 % Si, 0 - 1,5 % Al, 0 - 1 % Fe, 0 - 1 % Mn, 0 - 1 % Pb, Rest Zink und unvermeidbare Verunreinigungen aufweist,
und daß das Gefüge zu wenigstens 80 % aus β-Anteilen, Rest α-Anteilen, besteht.

3. Kupfer-Zink-Legierung nach den Ansprüchen 1 oder 2,
dadurch gekennzeichnet,
daß sie 44 - 49 % Cu, 13,5 - 16 % Ni, 3,2 - 3,9 % Si, Rest Zink und unvermeidbare Verunreinigungen aufweist und daß das Gefüge zu 100 % aus β-Phase besteht.

4. Verwendung einer Kupfer-Zink-Legierung,
bestehend aus 40 - 65 b% Cu, 8 - 25 % Ni, 2,5 - 5 % Si, 0 - 3 % Al, 0 - 3 % Fe. 0 - 2 % Mn, 0 - 2 % Pb, Rest Zink sowie unvermeidbaren Verunreinigungen, wobei das Verhältnis Ni : Si = 3 bis 5 : 1 beträgt und das Gefüge zu wenistens 75 % aus β-Anteilen, Rest α-Anteilen, jedoch keinen γ -Anteilen besteht und die Nickelsilizide als vorwiegend rundliche intermetallische Phase vorliegen, für Halbzeuge und Gegenstände, die hochbelastet und extrem auf Verschleiß beansprucht werden und einen hohen Reibungsbeiwert aufweisen.

5. Verwendung einer Kupfer-Zink-Legierung mit einer Zusammensetzung nach Anspruch 2 für einen Verwendungszweck nach Anspruch 4.

6. Verwendung einer Kupfer-Zink-Legierung mit einer Zusammensetzung nach Anspruch 3 für einen Verwendungszweck nach Anspruch 4.

## Claims

1. Copper-zinc alloy for wrought products and articles which are highly stressed, are subject to extreme wear and tear and have a high coefficient of friction, in particular for synchronous rings,
characterized in that
it contains 40 - 65% Cu, 8 - 25% Ni, 2.5 - 5% Si, 0 - 3% Al, 0 - 3% Fe, 0 - 2% Mn, 0 - 2% Pb, the rest being zinc and unavoidable impurities,
in that the ratio Ni : Si = 3 to 5 : 1
and in that the structure at least 75% comprises β-constituents, the rest α-constituents but no γ-constituents and the nickel silicides are present as predominantly round intermetallic phase.

2. Copper-zinc alloy according to Claim 1,
characterized in that
it contains 43- 52% Cu, 10 - 17% Ni, 3 - 4.2% Si, 0 - 1.5% Al, 0 - 1% Fe, 0 - 1% Mn, 0 - 1% Pb, the rest being zinc and unavoidable impurities,
and in that the structure at least 80% comprises β-constituents, the rest α-constituents.

3. Copper-zinc alloy according to Claims 1 or 2,
characterized in that
it contains 44 - 49% Cu, 13.5 - 16% Ni, 3.2 - 3.9% Si, the rest zinc and unavoidable impurities, and in that the structure 100% is made up of β-phase.

4. Use of a copper-zinc alloy,
made up of 40 - 65% Cu, 8 - 25% Ni, 2.5 - 5% Si, 0 - 3% Al, 0 - 3 % Fe, 0 - 2% Mn, 0 - 2% Pb, the rest zinc and unavoidable impurities, the ratio Ni : Si = 3 to 5 : 1 and the structure at least 75% comprises β-constituents, the rest α-constituents, but no γ-constituents, and the nickel silicides are present as predominantly round intermetallic phase, for wrought products and articles which are highly stressed, are subject to extreme wear and tear and have a high coefficient of friction.

5. Use of a copper-zinc alloy with a composition according to Claim 2 for an application according to Claim 4.

6. Use of a copper-zinc alloy with a composition acording to Claim 3 for an application according to Claim 4.

## Revendications

1. Alliage de cuivre et de zinc pour produits semi-finis et objets qui sont fortement sollicités et extrêmement soumis à usure et présentent un haut coefficient de friction, en particulier pour anneaux de synchronisation, caractérisé en ce qu'il comporte 40 à 65 % Cu, 8 à 25 % Ni, 2,5 à 5 % Si, 0 à 3 % Al, 0 à 3 % Fe, 0 à 2 % Mn, 0 à 2 % Pb, le reste de zinc et des impuretés inévitables, en ce que le rapport Ni : Si = 3 à 5 : 1, et en ce que la structure est faite d'au moins 75 % de fraction β, le reste de fraction α, mais pas de fraction γ, et les siliciures de nickel sont présents en tant que phase intermétallique principalement sphéroïdale.

2. Alliage de cuivre et de zinc selon la revendication 1, caractérisé en ce qu'il comporte de 43 à 52 % Cu, 10 à 17 % Ni, 3 à 4,2 % Si, 0 à 1,5 % Al, 0 à 1 % Fe, 0 à 1 % Mn, 0 à 1 % Pb, le reste de zinc et d'impuretés inévitables, et en ce que la structure est constituée d'au moins 80 % de fraction β, le reste de fraction α.

3. Alliage de cuivre et de zinc selon les revendications 1 ou 2, caractérisé en ce qu'il comporte 44 à 49 % Cu, 13,5 à 16 % Ni, 3,2 à 3,9 % Si, le reste de zinc et d'impuretés inévitables et en ce que la structure est constituée à 100 % de phase β.

4. Utilisation d'un alliage de cuivre et de zinc, constitué de 40 à 65 % Cu, 8 à 25 % Ni, 2,5 à 5 % Si, 0 à 3 % Al, 0 à 3 % Fe, 0 à 2 Mn, 0 à 2 % Pb, le reste de zinc ainsi que d'impuretés inévitables, le rapport Ni : Si = 3 à 5 : 1 et la structure étant constituée d'au moins 75 % de fraction β, le reste de fraction α, mais pas de fraction γ, et les siliciures de nickel sont présents en tant que phase intermétallique principalement sphéroïdale, pour produits semi-finis et des objets qui sont fortement sollicités et extrêmement soumis à usure et présentent un coefficient de friction élevé.

5. Utilisation d'un alliage de cuivre et de zinc avec une composition selon la revendication 2 pour une application selon la revendication 4.

6. Utilisation d'un alliage de cuivre et de zinc avec une composition selon la revendication 3 pour une application selon la revendication 4.
